# EUROPEAN PATENT APPLICATION

(11) **EP 1 223 729 A2**
(43) Date of publication of application: **17.07.2002**
(21) Application number: 01115729.4
(22) Date of filing: 06.07.2001
(51) Int. Cl.: H04M 1/725

(54) **A user supported display device**

(30) Priority: 16.01.2001 US 761490
(71) Applicant: Xybernaut Corporation, Fairfax, Virginia 22033 (US)
(72) Inventor: Inasaka, Rei, Chigasaki Kanagawa 283-0052 (JP)
(74) Representative: Borchert, Uwe Rudolf, Dipl.-Ing.

(57) **Abstract**

The invention is essentially an external user supported display device for personal communication devices and wireless phones. The device is worn on the body of the user and is able to display graphic images and video not able to be displayed on the displays inherent to current mobile phones. The device is designed for use in broadband wireless environments. The device is also able to output digital stereophonic audio either alone or as an accompaniment to video content.

## Description

The invention relates to a user supported display device according to the features of claim 1.

The invention is directed to the field of body worn video display devices, specifically body worn, external display devices for mobile phones, personal communication devices and personal digital assistants which allow users to view more content than is possible on the displays inherent to such devices and with better resolution, and even to listen to content.

There are now hundreds of millions of mobile phone and personal communication device (hereinafter PCD) users world wide. Increasingly, these subscribers are using their phones not just as telephones, but as information portals to send and receive email and access wireless web content. The demand for wireless communication is increasing on a daily basis. Wireless networks are currently being constructed the world over. All modern countries provide pervasive wireless phone coverage and new wireless networks are being continuously planned and constructed in emerging countries. The next level for wireless communication companies is to deliver web-like content to wireless subscribers. Several companies, including Sprint with PCS service in the United States and NTT DoKoMo with IMODE service in Japan, are already delivering limited web content over their wireless networks. Wireless phone manufacturers such as Nokia Corporation and Qualcom Corporation among others, are building this functionality into their phones and their wireless protocols, including embedded versions of content browsers. Wireless subscribers are now able to receive wireless content such as sports scores, stock quotes, directory information, email, etc. directly to their wireless devices on an automatic or demand basis.

The current method of delivering Internet type content to wireless communication devices over CDMA networks is the wireless application protocol (WAP). WAP is essentially a protocol for Internet servers to communicate with mobile phones over wireless networks. Using a translation server, WAP strips down web content into rudimentary text which summarizes the information contained in the original web page so that it can be quickly and efficiently transmitted. This removes all graphics and effects a several order of magnitude reduction in size of the data. This striped down data can then be sent to user devices over existing wireless networks. The user devices themselves have an embedded version of a micro-browser with only minimal functionality for viewing the information. The limitation of WAP-type content is that it is 2-D and must be viewed on the poor quality displays integral to today's wireless devices. These displays are usually back-lit, single color or gray scale and are not capable of delivering high quality graphics or high fidelity audio. The primary reason for this inferior quality in graphic presentation is due not to display technology but rather to wireless bandwidth. The bandwidth of today's wireless protocols will not efficiently transmit robust digital multimedia and Internet content. In the future this will change, as wide-band CDMA and other future broadband wireless technologies. It will soon be possible to receive true Internet multimedia content on wireless devices. This will create a need for a high quality display which remains in a physically small form factor to visualize this content and take advantage of the transmission capability of broadband. Broadband content will include not only video and graphics but also high fidelity audio. Samsung Corporation of Korea manufactures a mobile phone with a built-in MP3 player that allows MP3 formatted digital music to be downloaded to the phone via a hardwire computer connection and played on headphones attached to the phone. With broadband wireless it will be possible to download the MP3's directly to the phone or communication device wirelessly so that they can be accessed without the use of a computer. A user can simply go to a web site available to wireless subscribers using their device, download music directly, and even listen to the music on their headphones using the device as the player.

In order to enhance the viewing of WAP content and more sophisticated operating systems, the display screens on phones and PCD's are becoming larger and larger to the point of dominating the surface area of the phone. Unfortunately, this trend runs contrary to the design constraint of making the physical form factor of the phone increasingly small. There is an inherent limitation on the size of the display screen, and thus the amount and type of information that can be displayed, imposed by the size of the actual device. These devices are typically designed to fit into a shirt or coat pocket or dock comfortably on a belt clip, thus a large, high quality display for these devices would be impractical. Furthermore, the display screens inherent to mobile phones and PCD's typically use single color or gray scale coloring with limited resolutions, making them an awkward tool for viewing graphical web-type content. This invention seeks to overcome these limitations by providing a display for viewing and listening to content with resolutions and color that is more typical of viewing this type of content on a personal computer.

External body-worn display devices are known in the art. Several commercial embodiments of head mounted displays exist for television signal output (NTSC and PAL) and computer generated output. Also known in the display arts are wrist mounted and even neck hung displays. These displays are usually used to display output from a video source or a computer so that a user can maintain his hands free to perform other functions. There are specific advantages to head mounted displays, not the least of which is to create a virtual image much larger then the physical size of the display screen. By looking through a small optic or into a concave reflective device it is possible to create the illusion of a large screen television with only a one inch square sized head mounted display. For instance, Olympus Corporation of Japan manufactures the Eye-Trek display, an eyeglass type display shaped like a pair of eyeglasses, which provides a display equivalent to a 62" television at a distance of 6 ½ feet. While the Olympus display is manufactured for viewing television-type NTSC format content it is possible to apply the same principle to the design of a monocular or binocular display for mobile telephones and communication devices. Sony Corporation of Japan manufactures a similar line of head mounted displays under the product name Glasstron. The Glasstron is available in two versions, an NTSC television-type display, and a computer output (VGA, SVGA) type display. Both include integrated stereo ear bud speakers and project a displayed image much larger than the physical size of the glasses. None of these displays, however, have been adapted to display broadband wireless multimedia content.

Thus, there exists a need for a user supported external display which can communicate in either a wired or wireless fashion with mobile phones or PCD's to provide a robust display for web-type content and with an integral ear phone speaker set capable of delivering high fidelity audio and an integral microphone capable of facilitating hands free telephone conversations. Such a display will enhance current wireless devices, expanding the display functionality over the present, and will take full advantage of future broadband wireless protocols. There is also a need for the display to possess integral or attached stereophonic headphone speakers so that a user may utilize the speaker while communicating with the phone and also for listening to the audio portion of content being displayed on the display, or simply to listen to digital music stored on or downloaded to their wireless device.

It is, therefore, an object of the present invention to provide a display which is devoid of the aforementioned limitations.

It is another object of the present invention to provide a display which provides higher quality resolution and color graphics than currently possible on communication device displays.

It is yet another object of this invention to provide a display which includes a microphone and speaker permitting hands free mobile telephone conversations.

An additional object of this invention is to provide a display with integral or attached earphone speakers for listening to a phone conversation and listening to content downloaded to the communication device.

A further object of this invention is to provide a display which is capable of playing high fidelity audio.

Still a further object of this invention is to provide a display for displaying web-type content which is currently available for viewing on mobile telephones and personal communications devices.

Another object of this invention is to provide a display which permits a user to download and view content and engage in a telephone conversation in a substantially hands free manner.

Yet another object of this invention is to provide a display which permits voice activated control.

Still yet another object of this invention is to provide a display device for mobile phones, personal communication devices and personal digital assistants which will meet the graphic performance levels afforded by broad band wireless access.

These and additional objects of this invention are accomplished generally by an external display for use with mobile telephones and personal communication devices capable of displaying quality color graphics and animation along with stereophonic sound.

The invention is essentially an external user supported display device for mobile phones and personal communication devices for viewing and listening to content delivered over wireless networks. The invention will provide significantly improved graphic display quality over the displays inherent to these devices. For the purposes of this specification and claims the term "external user-supported display device" will be taken to be synonymous with head mounted display, both monocular and binocular, neck hung display, wrist worn display, or other body worn display which is not integral to a mobile phone or communication device, but rather resides in a separate enclosure and communicates with the device. The device will plug into a video output connector on the phone or communication device and will receive its video signal from the device. Alternatively, the device can use a low power, digital, wireless communication protocol for communicating with the phone or PCD. Exemplary protocols are IrDA, RF, and BlueTooth. The device will enable users to view content in an essentially hands-free manner while their actual phone or PCD remains docked in a holster. It will also allow them to view better quality video and graphics than is possible on existing communication device screens. It can incorporate voice activated dialing, already available in hand held phones which are absent an external user supported display. Instead of speaking into the phone, the user can speak directly into the microphone attached to or communicating with the head mounted display. Once a phone call has been initiated, the user can have a conversation while his phone remains holstered on his belt or in his pocket.

In a preferred embodiment, the device of the present invention is a head mounted display and audio device which plugs into a mobile phone or personal communication device. For the purposes of this disclosure and claims, the term "communication devices" will be analogous with mobile phones, personal communication devices and communication enabled PDAs. Preferably, the communication device is docked in a holster such as a belt clip holster, enabling the user to operate the device in a hands-free manner. In one scenario, the user will be able to view Internet-like content over the display device. This will include graphics and animation, not currently able to be viewed on today's phone display screens. Additionally, the device will create the illusion of a display which is much larger than its actual size. Selection and navigation of content visualized on the display can be controlled by speech activation means facilitated by the headset or alternatively by physical controls on the communication device itself. In the interest of saving power, it may be desirable to have the display on the communication device automatically disabled when the head set display is plugged in. The headset display device should also possess stereophonic speakers so that the user may listen to content as well as view it, as graphics, video and other content are often accompanied by audio content and/or music.

Also in a preferred embodiment of this invention, a user is able to view web-type content which is delivered to the user's mobile phone or PCD and displayed in a manner more consistent with viewing it on a computer. The main reason that wireless communications companies have only been providing limited content is because of band width and the display capabilities of the devices receiving the content. Currently, items such as scores, stock quotes, news headlines, and even messaging are available, however, they are visualized as simple text. As broadband wireless service emerges, wireless communications companies will be providing graphic rich content which is more consistent with Internet content. This will serve as a means of making more revenues and attracting more customers with new services; particularly if the wireless companies partnered with an ISP such as AOL ® capable of delivering content. This could be used not only as a tool for viewing enhanced content but also for listening to it as well. In a preferred embodiment, the external display device or alternatively the phone itself, can have an embedded version of an MP3 player or alternatively a version of Real Networks Real Jukebox ® for listening to downloadable music. Given the immense popularity of MP3's and the web as a medium for acquiring digital music, it would be useful and appealing to include this capability in both the telephones and the display device. Since the device preferably possesses stereophonic headphones or speakers, high fidelity digital music can be enjoyed by owners of these devices when they are not using it to facilitate phone calls. Additionally, because of the display's video capabilities, mpeg compliant or other type movies can be played with audio and video utilizing an embedded version of either the Windows ® media player or Real Networks Real Player ® client or other client capable of playing such multimedia content.

In another related embodiment, the device of the present invention should interface with the communication device in a manner which permits hands-free telephone conversations. Preferably, a microphone will be attached to or nearby the display device. If the device is a head-mounted display, as in the preferred embodiment, then the microphone could be attached to or built into the headset. When the user is making a phone call, the display portion could simply be rotated out of the way, or detached from the microphone and speakers. The microphone should also serve as an input for voice activated control of the phone. A digital signal processor can reside in the headset or alternatively in the microphone which interprets voice commands to the phone such as voice activated dialing and number recognition.

In an additional embodiment the display device of the present invention can be a neck hung display device which is supported by a strap or other means which rests behind the neck of the user, while the display is in his downward line of sight. Alternatively, the display device could be a wrist mounted display device which is worn on the wrist of the user in a manner that does not appreciably interfere with the movement of the wearer's arm. One of ordinary skill in the art can appreciate that the display device can take various forms, without departing in spirit or scope from the present invention.

In any embodiment, the display device of the present invention will receive its image signal from an underlying mobile phone or communication device in either wired, wireless or combination format.

The device of the present invention will best be utilized in an environment where broad band wireless access is available. As broadband wireless services evolve there will be demand for higher quality displays for wireless devices. Rather than increasing the size of the display, which in turn will increase the size and weight of the wireless device, the present invention provides a display which creates the illusion of a display several orders of magnitude larger than its physical form factor. Thus, by using the present invention, wireless devices need not change in size to receive and display broadband wireless content. The novel display of the present invention will interface directly with the wireless device and receive selected video and audio content from the device. Preferably, the display will receive its operating power from the power supply of the wireless device which be facilitated by a single connector to the phone. This connector will serve as a power and bi-directional data bus for the external display device.

Additional advantages and characteristics result from the following description of several embodiments of the invention in connection with the drawings. In the drawings are shown:
- FIG 1: illustrates a head mounted embodiment of the present invention featuring a monocular display device;
- FIG 2: illustrates an alternative head mounted embodiment of the present invention featuring an eyeglass-type binocular display device;
- FIG 3A and 3B: illustrate an embodiment of the present invention which utilizes a neck hung display and ear hook microphone; and
- FIG 4: illustrates a wrist worn display embodiment of the present invention.

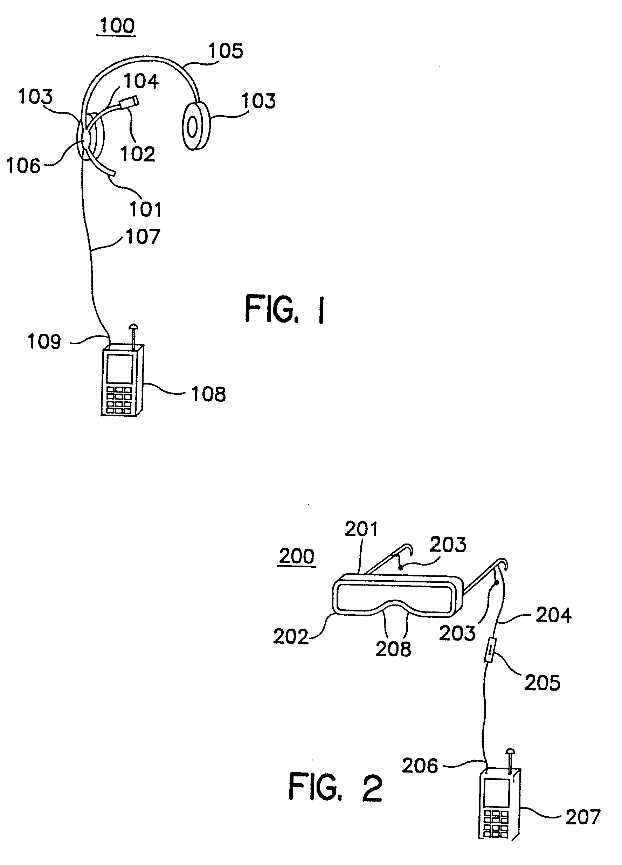

Discussion of the invention will now be made with specific reference to the figures. In FIG 1 a headset display 100 is illustrated. The headset 100 is comprised of a cross bar 105 with two ear pads 103. On one side of the headset 100 is a flexible extension arm 104 and a display 102. Ideally, the arm 104 and display 102 can be mounted on either ear pad 103. The ear pads 103 should contain stereophonic speakers for listening to audio content viewed on the display 102. The flexible arm 104 allows the display 102 to be selectively adjusted for position or even pushed out of view completely. Preferably, the display 102 is small enough so as not to occlude the user's view. Several display types are possible, including ones which the user looks through, ones which can not be viewed through and ones which rely upon a reflective optic. One of ordinary skill in the art will understand that the specific type of display technology is not critical to the invention but rather the idea of utilizing a head mounted display as a secondary display for a mobile phone or personal communication device. Also integral to the headset 100 is a microphone 101 on a hinged extension arm 106. The microphone 101 allows a user to engage in a telephone conversation through the headset 100 interface rather than speaking directly into the phone 108. The headset 100 is connected by a wired connection 107 to a mobile phone 108 by connector 109. In this embodiment a user can comfortably wear the headset display device 100 even when he or she is not using it. The mobile phone 108 can be holstered using a belt clip. Such clips are notoriously well known in the art. If the wearer receives a phone call he can push a single button on the phone 108 and then perform the rest of the call in a hands-free mode. Additionally, he can use the phone 108 to navigate over a wireless network to a content delivery site where he can download and view graphic images and audio using his headset's 100 display 102 and speakers.

FIG 2 illustrates a related embodiment of the present invention based on an eye-glass type binocular display 200. The display 200 is restrained by an eye-glass shaped wire frame 201. The wire frame 201 holds the actual display unit 202. The frame 201 contains internal wires supplying the audio and video content. A pair of ear bud stereophonic speakers 203 are integral to the frame 201. A single wire 204 connects the display 200 to a mobile phone 207 via a connector 206. A microphone 205 is built into the cable 204 which will rest near the upper chest of the wearer so that it is able to pick up the voice of the wearer while he is engaged in a telephone conversation. Since the eye-glass display 200 embodiment of the present invention will substantially occlude the wearer's vision when he is using it, it will only be for use when the user is in a seated or stationary position. However, the quality of the graphic display will be significantly enhanced because of the fact that it is binocular in nature allowing for a much larger virtual image and more immersive display experience.

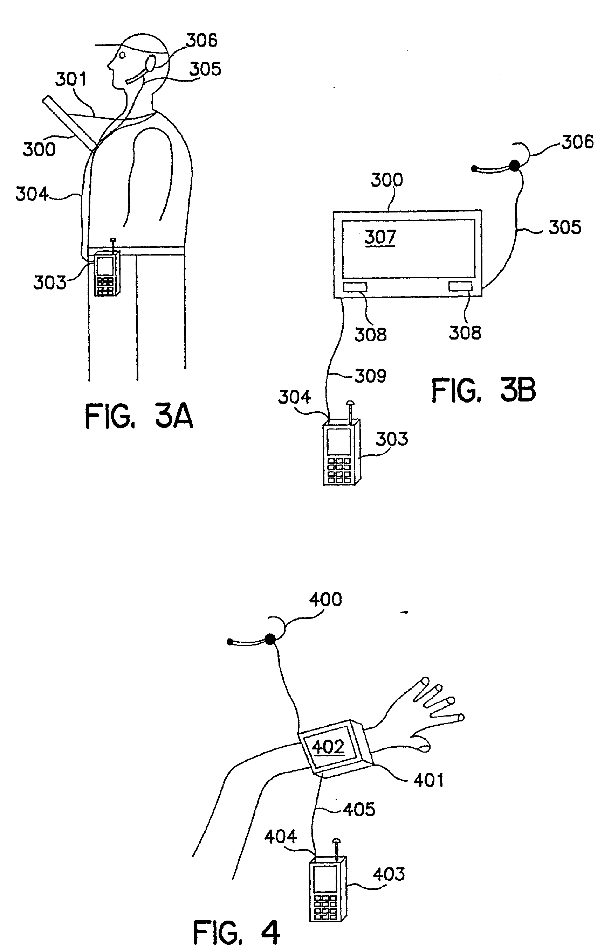

FIGs 3A and 3B illustrate a different embodiment that may be more comfortable for some users, specifically a neck hung display 300. The neck hung display 300 comprises a display screen 307 with integral stereo speakers 308 and a support strap 301. The display 300 is supported on one side by the wearer's chest and on the other by the strap 301 which either goes behind the neck of the wearer, over his shoulders, or a combination of both. A separate headset piece 306 containing an earphone speaker and microphone connects to the display 300 via a wired connection 305. Alternatively, this connection may be wireless. This headset 306 allows the user to engage in hands-free telephone conversation while his mobile phone 303 remains docked in a belt clip or like restraining device.

FIG 4 illustrates a different embodiment which may be more desirable to some users of the present invention. It is a wrist mounted display 401 combined with a headset 400 with microphone and ear piece speaker. The display itself, 401, may possess stereophonic speakers for listening to content, but the headset portion 400 should have a single speaker so that the user can perform telephone functions. The display itself, 402, may be an LCD or other type flat panel display. The display itself, 401, will communicate directly with the user's communication device 403 via wire 405 and connector 404.

The preferred and optimumly preferred embodiments of the present invention have been described herein and shown in the accompanying drawings to illustrate the underlying principles of the invention, but it is to be understood that numerous modifications and ramifications may be made without departing from the spirit or scope of this invention.

### List of Reference Signs

- 100: headset
- 101: microphone
- 102: display
- 103: ear pads
- 104: extension arm
- 105: cross bar
- 106: extension arm
- 107: wired connection
- 108: phone
- 109: connector

- 200: display
- 201: wire frame
- 202: display unit
- 204: wire / cable
- 205: microphone
- 206: connector
- 207: mobile phone

- 300: display
- 301: support strap
- 303: mobile phone
- 305: wired connection
- 306: headset piece
- 307: screen
- 308: speakers

- 400: headset
- 401: display
- 402: display
- 403: communication device
- 404: connector
- 405: wire

## Claims

1. A user supported display device for use with a personal communication device, including mobile phones and personal digital assistants, said display device comprising in combination:
a display means;
electrical connection means attached to said display means for receiving output via output means from said personal communication device wherein said output means includes a member selected from the group consisting of video means, audio means and mixtures thereof, and
means for attaching said display means to the body of a user.

2. The display device according to claim 1, **characterized in that** said display means is provided with a display screen and a housing.

3. The display device according to any one of the preceding claims, **characterized by** a circuitry for supplying a signal to said display screen.

4. The display device according to any one of the preceding claims, **characterized in that** said display device receives an image signal from said communication device in a format selected from the group consisting of a wireless format, a wired format and combination thereof.

5. The display device according to any one of the preceding claims, **characterized in that** said means for attaching said display means to the body of a user is either a monocular or binocular display selected from the group consisting of neck hung means, wrist attachment means, head mounted means, body attachment means and mixtures thereof.

6. The display device according to any one of the preceding claims, **characterized by** a configuration as an external user supported display.

7. The display device according to claim 6, **characterized in that** said display means is an external user supported display device not part of said personal communication device and having means for electrical connection to said personal communication device.

8. The display device according to any one of the preceding claims, **characterized in that** said personal communication device is voice activated.

9. The display device according to any one of the preceding claims, **characterized in that** said user supported display device is voice activated.

10. The display device according to any one of the preceding claims, **characterized in that** said personal communication device and user supported display device have activation means selected from the group consisting of audio activation, manual activation and mixtures thereof.

11. The display device according to any one of the preceding claims, **characterized in that** said display is a head mounted display, a flat panel display, a neck hung display, or a wrist worn display.

12. The display device according to any one of the preceding claims, **characterized in that** a hands-free microphone and speaker combination communicating with said display screen and said mobile phone for facilitating telephone conversations are provided.

13. The display device according to claims 3 to 12, **characterized by** stereophonic audio speakers in electrical contact with said circuitry.

14. The display device according to any one of the preceding claims, **characterized in that** said signal is a video signal and/or an audio signal.

15. The display device according to any one of the preceding claims, **characterized in that** said connection means comprises a single connector for electrical power, data input and data output.
